# EUROPÄISCHE PATENTSCHRIFT

(11) **EP 0 429 830 B1**
(45) Veröffentlichungstag und Bekanntmachung des Hinweises auf die Patenterteilung: **15.03.1995**
(21) Anmeldenummer: 90119881.2
(22) Anmeldetag: 17.10.1990
(51) Int. Cl.: C14C 3/18, C14C 3/28

(54) **Verfahren zum Alleingerben von Blössen und zum Nachgerben von Chromleder**
Method of tanning hides and retanning chrome-tanned leather
Procédé de tannage des peaux et de retannage du cuir tanné au chrome

(30) Priorität: 27.10.1989 DE 3935879
(43) Veröffentlichungstag der Anmeldung: 05.06.1991
(73) Patentinhaber: BASF Aktiengesellschaft, 67063 Ludwigshafen (DE)
(72) Erfinder: Schaffer, Ortwin, Dr., W-6700 Ludwigshafen (DE); Stork, Karl, Dr., W-6719 Carlsberg (DE); Reuther, Wolfgang, Dr., W-6900 Heidelberg (DE); Weiser, Jürgen, Dr., W-6905 Schriesheim (DE)

(56) Entgegenhaltungen:
- EP-A- 0 301 406
- FR-A- 2 262 056

## Beschreibung

Die vorliegende Erfindung betrifft ein verbessertes Verfahren zum Alleingerben von Blößen und zum Nachgerben von Chromleder sowie neue wasserlösliche Kondensationsprodukte und ein Verfahren zu ihrer Herstellung.

Unter den Gerbeverfahren spielt die Chromgerbung heute immer noch eine dominierende Rolle. Aber mit chromhaltigen Gerbmitteln allein kann man nicht Leder für alle Verwendungszwecke herstellen. Deshalb wird meist eine Kombinationsgerbung durchgeführt, wobei zuerst mit Chromgerbstoffen wie Chrom(III)-Salzen die Hauptgerbung und danach beispielsweise mit vegetabilen oder synthetischen Gerbstoffen eine Nachgerbung erfolgt. Auch werden vegetabile und synthetische Gerbstoffe zur Alleingerbung ohne chromhaltige Gerbmittel eingesetzt.

Die Verwendung solcher vegetabiler und synthetischer Gerbstoffe führt jedoch in der Regel zu einer Reihe von Nachteilen, beispielsweise zu geringer Lichtechtheit und zu geringer Wärmeresistenz des Leders, Anfärben des Leders durch die Eigenfarbe des Gerbstoffs oder keiner ausreichenden Alleingerbwirkung dieser Mittel.

Aufgabe der vorliegenden Erfindung war es daher, Gerbmittel mit verbesserter Alleingerbwirkung bereitzustellen, so daß auf die Mitverwendung von chromhaltigen Gerbemitteln verzichtet werden kann, oder zumindest mit diesen Mitteln zu bewirken, daß in Kombination mit Chromgerbstoffen die Aufhebung der oben beschriebenen Mängel des Standes der Technik erreicht wird.

Aus der EP-A 301 406 sind Kondensationsprodukte von Melamin mit Glyoxal und/oder Glyoxylsäure bekannt, die Verbindungen mit einer phenolischen Hydroxylgruppe oder Stickstoffverbindungen miteinkondensiert enthalten können. Diese Kondensationsprodukte werden als Gerbereihilfsmittel für ein chromfreies Gerbeverfahren aber immer in Verbindung mit Aluminium-, Titan- oder Zirkon-haltigen Gerbstoffen empfohlen.

Aus der FR-A 2 262 056 sind Kondensationsprodukte aus 0,25 bis 0,9 mol Harnstoff und 1 mol Glyoxal bekannt. Sie werden als Hilfsmittel für die Beschichtung von Papier empfohlen.

Demgemäß wurde ein Verfahren zum Alleingerben von Leder und zum Nachgerben von Chromleder gefunden, welches dadurch gekennzeichnet ist, daß man hierzu ein wasserlösliches Kondensationsprodukt aus
A) 1 mol Melamin, Dicyandiamid, Harnstoff oder Thioharnstoff oder eines Gemisches dieser Verbindungen,
B) 0,5 bis 12 mol Glyoxylsäure oder eines aliphatischen Dialdehyds mit bis zu 6 C-Atomen oder eines Gemisches dieser Verbindungen,
C) 0 bis 3 mol einer einkondensierbaren Verbindung mit mindestens einer phenolischen Hydroxylgruppe oder mindestens einer alkoholischen Hydroxylgruppe und
D) 0 bis 3 mol einer einkondensierbaren Verbindung mit einer Amid- oder Amin-Gruppierung
oder die Alkalimetall- oder Ammoniumsalze dieser Kondensationsprodukte verwendet.

Als Komponente A setzt man bevorzugt Melamin, Dicyandiamid, Harnstoff oder Thioharnstoff allein oder eine Mischung aus 50 bis 95 mol-% Melamin und 5 bis 50 mol-% Dicyandiamid ein. Man kann aber auch Mischungen aus Melamin und Harnstoff, Melamin und Thioharnstoff, Dicyandiamid und Harnstoff, Dicyandiamid und Thioharnstoff und Harnstoff und Thioharnstoff sowie eine Mischung aus drei oder vier der genannten Verbindungen verwenden.

Als Komponente B dienen Glyoxalsäure oder ein aliphatischer Dialdehyd mit bis zu 6 C-Atomen wie beispielsweise Glyoxal, Malondialdehyd, Succindialdehyd, Glutardialdehyd oder Adipindialdehyd. Besonders bevorzugt werden Glyoxylsäure, Glyoxal und Glutardialdehyd allein und Mischungen aus Glyoxylsäure und Glyoxal sowie aus Glyoxylsäure und Glutardialdehyd, wobei die beiden Bestandteile in diesen Mischungen mit einem Anteil von jeweils 1 bis 99 mol-%, vorzugsweise 20 bis 80 mol-%, enthalten sind.

Die Summe aller Komponenten B liegt zwischen 0,5 und 12 mol, vorzugsweise 2 und 7 mol pro Mol A. Die Glyoxylsäure kann als freie Säure oder in Form ihrer Alkalimetallsalze oder ihres Ammoniumsalzes eingesetzt werden.

Als einkondensierbare Verbindung C kommen Phenole wie Phenolsulfonsäuren, Sulfosalicylsäuren, Salicylsäure, Resorcin, Brenzkatechin, Hydrochinon, Hydroxychinoline oder Bis(hydroxyphenyl)sulfone sowie Alkohole, insbesondere Kohlenhydrate wie Glucose oder Stärke, in Betracht. Saure Verbindungen können dabei in Form ihre Alkalimetallsalze einkondensiert werden.

Als einkondensierbare Verbindung D können Carbonsäureamide, Sulfonsäureamide, Carbonsäureimide, substituierte Harnstoffe, Aminosäuren, Iminosäuren sowie Dialkylamine und Dialkanolamine verwendet werden. Beispiele hierfür sind Acetamid, Formamid, Benzoesäureamid, Amidosulfonsäure, Succinimid, Phenylharnstoff, Glycin, Alanin, Phenylglycin, Iminodiessigsäure, Diethylamin, Dipropylamin, Dibutylamin, Diethanolamin oder Diisopropanolamin. Saure Verbindungen können dabei in Form ihrer Alkalimetallsalze einkondensiert werden.

Die Verbindungen C und D werden in einer Menge von 0 bis 3 mol, vorzugsweise 0 bis 0,5 mol pro Mol A, einkondensiert.

Besonders bevorzugte Kondensationsprodukte setzen sich wie folgt zusammen:
- 1 mol Melamin und 5 bis 7 mol einer Mischung aus jeweils 15 bis 85 mol-%, vorzugsweise 30 bis 70 mol-% Glyoxylsäure und Glutardialdehyd
- 1 mol Melamin oder Thioharnstoff und 2 bis 7 mol einer Mischung aus jeweils 5 bis 95 mol-%, vorzugsweise 25 bis 75 mol-% Glyoxylsäure und Glyoxal
- 1 mol Harnstoff oder Dicyandiamid und 0,5 bis 7 mol einer Mischung aus jeweils 5 bis 95 mol-%, vorzugsweise 25 bis 75 mol-% Glyoxylsäure und Glyoxal
- 1 mol einer Mischung aus 50 bis 95 mol-% Melamin und 5 bis 50 mol-% Dicyandiamid und 2 bis 12 mol einer Mischung aus jeweils 10 bis 90 mol-%, vorzugsweise 30 bis 70 mol-% Glyoxylsäure und Glyoxal
- 1 mol Harnstoff und 2 bis 7 mol Glyoxal
- 1 mol Melamin oder Harnstoff oder Dicyandiamid und 0,5 bis 7 mol Glutardialdehyd
Die im erfindungsgemäßen Verfahren zur Verwendung kommenden Kondensationsprodukte werden durch Kondensation der Komponenten A bis D in den angegebenen Mengen in der Weise hergestellt, daß man alle benötigten Komponenten auf einmal zusammengibt und zum Endprodukt reagieren läßt oder daß man einen Teil der Komponenten vorlegt, miteinander reagieren läßt, eventuell portionsweise danach die restlichen Komponenten zugibt und, gegebenenfalls stufenweise, zum Endprodukt reagieren läßt.

Die Kondensation erfolgt in wäßriger Lösung bei Temperaturen von 20 bis 100°C, vorzugsweise 30 bis 90°C, und normalerweise bei einem pH-Wert von 1 bis 8. Die Kondensationsreaktion ist im angegebenen Temperaturbereich meist innerhalb von 10 bis 240 Minuten beendet. Man erhält so in der Regel klare wäßrige Harzlösungen, die mit Wasser verdünnbar sind.

Die erhaltenen Lösungen werden Zweckmäßigerweise auf einen Feststoffgehalt von 10 bis 80 Gew.-%, insbesondere 20 bis 60 Gew.-%, eingestellt und können direkt zum Gerben der Leder bzw. Blößen eingesetzt werden. Man kann die Kondensationsprodukte aber auch nach üblichen Verfahren wie Abdestillieren des Wassers oder durch Sprühtrocknung in Pulverform erhalten. Die Kondensationsprodukte können, sofern sie saure Gruppen tragen, in ihre Alkalimetall- oder Ammoniumsalze überführt werden.

Gegenstand der vorliegenden Erfindung sind auch neue wasserlösliche Kondensationsprodukte aus
A') 1 mol Dicyandiamin, Harnstoff oder Thioharnstoff oder eines Gemisches dieser Verbindungen untereinander oder mit bis zu einem Anteil von 0,8 mol Melamin,
B) 0,5 bis 12 mol, vorzugsweise 2 bis 7 mol der Komponente B,
C) 0 bis 3 mol, vorzugsweise 0 bis 0,5 mol der Komponente C und
D) 0 bis 3 mol, vorzugsweise 0 bis 0,5 mol der Komponente D
mit Ausnahme von Kondensationsprodukten aus 0,25 bis 0,9 mol Harnstoff und 1 mol Glyoxal,
welche eine Untergruppe der im erfindungsgemäßen Verfahren zur Verwendung kommenden Kondensationsprodukte darstellen.

Die genannten neuen wasserlöslichen Kondensationsprodukte werden wie oben beschrieben durch Kondensation in wäßriger Lösung bei 20 bis 100°C hergestellt.

Das erfindungsgemäße Gerbeverfahren eignet sich in hervorragender Weise zum Alleingerben von Blößen in wäßriger Flotte. Hierbei geht man zweckmäßigerweise so vor, daß die gepickelten Blößen, beispielsweise Rindsblößen mit einer Spaltstärke von 1,5 bis 4 mm, bei einem pH-Wert von 2 bis 5, insbesondere 2,5 bis 4, und bei einer Temperatur von 15 bis 50°C, insbesondere 20 bis 30°C, während eines Zeitraumes von 5 bis 30 Stunden mit einer wäßrigen Lösung der Kondensationsprodukte behandelt werden. Die Behandlung erfolgt beispielsweise durch Walken in einem Faß. Die benötigte Menge an Kondensationsprodukt beträgt normalerweise, bezogen auf das Blößengewicht, 5 bis 50 Gew.-%, insbesondere 10 bis 30 Gew.-%. Die Flottenlänge, d.h. das prozentuale Gewichtsverhältnis der Behandlungsflotte zur Ware, beträgt üblicherweise 30 bis 200 %, bezogen auf das Blößengewicht.

Nach erfolgter Behandlung wird das Leder üblicherweise auf einen pH-Wert von 4 bis 8 eingestellt, wozu man beispielsweise Natriumhydrogencarbonat verwendet, und gewünschtenfalls gefärbt und gefettet.

Das erfindungsgemäße Gerbeverfahren eignet sich ebenfalls in hervorragender Weise zum Nachgerben von Chromleder in wäßriger Flotte. Es wird in der Regel so durchgeführt, daß man die gepickelten Blößen, beispielsweise Rindsblößen mit Spaltstärken von 1,5 bis 4 mm, mit einem üblichen chromhaltigen Gerbstoff, beispielsweise Chrom(III)-Salzen wie Chrom(III)-sulfat, in an sich bekannter Weise gerbt, die so erhaltenen vorgegerbten Häute ("Wetblues") entsäuert und bei einem pH-Wert von 4 bis 7, insbesondere 4 bis 6, und bei Temperaturen von 15 bis 50°C, insbesondere 30 bis 40°C, während eines Zeitraumes von 30 bis 480 Minuten mit einer wäßrigen Lösung der Kondensationsprodukte behandelt. Diese Behandlung erfolgt beispielsweise durch Walken in einem Faß. Die benötigte Menge an Kondensationsprodukt beträgt normalerweise, bezogen auf das Falzgewicht des Leders, 1 bis 30 Gew.-%, insbesondere 3 bis 20 Gew.-%. Die Flottenlänge beträgt üblicherweise 30 bis 200 %, bezogen auf das Falzgewicht des Leders.

Nach erfolgter Behandlung wird das Leder üblicherweise bei einem pH-Wert von 3 bis 5 fixiert, wozu man beispielsweise eine organische Säure wie Ameisensäure verwendet, und gewünschtenfalls gefärbt und gefettet.

Das erfindungsgemäß nachgegerbte Chromleder kann vor der Nachgerbung mit den wasserlöslichen Kondensationsprodukten zusätzlich mit anderen Gerbemitteln wie Polymergerbstoffen oder Syntanen behandelt worden sein. Auch können diese Kondensationsprodukte gleichzeitig mit derartigen zusätzlichen Gerbemitteln eingesetzt werden.

Die nach dem erfindungsgemäßen Verfahren hergestellten Leder haben eine hohe Schrumpfungstemperatur von über 100°C, was für die weitere Verarbeitung des Leders von großer Bedeutung ist. Die Leder weisen gute Echtheitseigenschaften wie vor allem hohe Lichtechtheiten auf und haben hohe Wärmeresistenzen. Auch tritt der Nachteil einer gelben bis braunen Eigenfarbe wie beispielsweise bei Verwendung von vegetabilen Nachgerbstoffen nicht mehr auf. Die mit den erfindungsgemäß eingesetzten Kondensationsprodukten hergestellten Leder haben eine helle Farbe, bei Alleingerbung meist elfenbeinfarbig bis weiß. Bei Nachgerbung von Chromleder hellen sie die Eigenfarbe des Chromleders deutlich auf. Ein wesentlicher Vorteil der erfindungsgemäß eingesetzen Kondensationsprodukte ist ihre hohe Alleingerbwirkung.

### Herstellungsbeispiel

### Beispiele 1 bis 4

### Kondensationsprodukte aus Melamin, Glyoxylsäure und Glutardialdehyd

Mischungen aus Melamin, 50 gew.-%iger Glyoxylsäurelösung und 50 gew.-%iger Natronlauge wurden 1 Stunde auf 60°C erwärmt. Nach Abkühlung der klaren Lösung auf 40°C wurde anschließend 50 gew.-%ige wäßrige Glutardialdehydlösung zugegeben und 1 Stunde bei 40°C gehalten. Man erhielt klare, wasserverdünnbare Harzlösungen. Tabelle 1 zeigt die Mengen und die Molverhältnisse der eingesetzten Verbindungen bzw. Lösungen.

**Tabelle 1**

| Beispiel | Melamin | | Glyoxylsäure | | Natronlauge | | Glutardialaldehyd | |
|---|---|---|---|---|---|---|---|---|
| | [g] | [mol] | [g] | [mol] | [g] | [mol] | [g] | [mol] |
| 1 | 126 | 1 | 444 | 3 | 240 | 3 | 600 | 3 |
| 2 | 126 | 1 | 296 | 2 | 160 | 2 | 800 | 4 |
| 3 | 126 | 1 | 592 | 4 | 320 | 4 | 400 | 2 |
| 4 | 126 | 1 | 740 | 5 | 400 | 5 | 200 | 1 |

### Beispiele 5 bis 7

### Kondensationsprodukte aus Melamin, Glyoxylsäure und Glyoxal

Mischungen aus Melamin, 50 gew.-%iger Glyoxylsäurelösung, 50 gew.-%iger Natronlauge und 40 gew.-%iger wäßriger Glyoxallösung wurden 1 Stunde auf 60°C erwärmt. Man erhielt klare, wasserverdünnbare Harzlösungen. Tabelle 2 zeigt die Mengen und die Molverhältnisse der eingesetzten Verbindungen bzw. Lösungen.

**Tabelle 2**

| Beispiel | Melamin | | Glyoxylsäure | | Natronlauge | | Glyoxal | |
|---|---|---|---|---|---|---|---|---|
| | [g] | [mol] | [g] | [mol] | [g] | [mol] | [g] | [mol] |
| 5 | 126 | 1 | 148 | 1 | 80 | 1 | 145 | 1 |
| 6 | 126 | 1 | 444 | 3 | 240 | 3 | 435 | 3 |
| 7 | 126 | 1 | 148 | 1 | 80 | 1 | 435 | 3 |

### Beispiele 8 bis 10

### Kondensationsprodukte aus Thioharnstoff, Glyoxylsäure und Glyoxal

Mischungen aus Thioharnstoff, 50 gew.-%iger Glyoxylsäurelösung, 50 gew.-%iger Natronlauge, 40 gew.-%iger wäßriger Glyoxallösung und Wasser wurden 1 Stunde auf 65°C erwärmt. Man erhielt klare, wasserverdünnbare Harzlösungen. Tabelle 3 zeigt die Mengen und die Molverhältnisse der eingesetzten Verbindungen bzw. Lösungen.

**Tabelle 3**

| Beispiel | Thioharnstoff | | Glyoxylsäure | | Natronlauge | | Glyoxal | | Wasser |
|---|---|---|---|---|---|---|---|---|---|
| | [g] | [mol] | [g] | [mol] | [g] | [mol] | [g] | [mol] | [g] |
| 8 | 76 | 1 | 148 | 1 | 80 | 1 | 435 | 3 | 40 |
| 9 | 76 | 1 | 296 | 2 | 160 | 2 | 290 | 2 | 80 |
| 10 | 76 | 1 | 444 | 3 | 240 | 3 | 145 | 1 | 115 |

### Beispiele 11 bis 16

### Kondensationsprodukte aus Harnstoff, Glyoxylsäure und Glyoxal

Mischungen aus Harnstoff, 50 gew.-%iger Glyoxylsäurelösung, 50 gew.-%iger Natronlauge und 40 gew.-%iger wäßriger Glyoxallösung wurden 1 Stunde auf 60°C erwärmt. Man erhielt klare, wasserverdünnbare Harzlösungen. Tabelle 4 zeigt die Mengen und die Molverhältnisse der eingesetzten Verbindungen bzw. Lösungen.

**Tabelle 4**

| Beispiel | Harnstoff | | Glyoxylsäure | | Natronlauge | | Glyoxal | |
|---|---|---|---|---|---|---|---|---|
| | [g] | [mol] | [g] | [mol] | [g] | [mol] | [g] | [mol] |
| 11 | 60 | 1 | 148 | 1 | 80 | 1 | 435 | 3 |
| 12 | 60 | 1 | 296 | 2 | 160 | 2 | 290 | 2 |
| 13 | 60 | 1 | 444 | 3 | 240 | 3 | 145 | 1 |
| 14 | 60 | 1 | 148 | 1 | 80 | 1 | 290 | 2 |
| 15 | 60 | 1 | 74 | 0,5 | 40 | 0,5 | 145 | 1 |
| 16 | 60 | 1 | 74 | 0,5 | 40 | 0,5 | 73 | 0,5 |

### Beispiele 17 bis 27

### Kondensationsprodukte aus Dicyandiamid, Glyoxylsäure und Glyoxal

Mischungen aus Dicyandiamid, 50 gew.-%iger Glyoxylsäurelösung, 50 gew.-%iger Natronlauge und Wasser wurden 4 Stunden auf 60°C erwärmt. Anschließend wurde auf 40°C abgekühlt, mit 40 gew.-%iger wäßriger Glyoxallösung versetzt und 1 Stunde bei 40°C gehalten. Man erhielt klare, wasserverdünnbare Harzlösungen. Tabelle 5 zeigt die Mengen und die Molverhältnisse der eingesetzten Verbindungen bzw. Lösungen.

**Tabelle 5**

| Beispiel | Dicyandiamid | | Glyoxylsäure | | Natronlauge | | Glyoxal | | Wasser |
|---|---|---|---|---|---|---|---|---|---|
| | [g] | [mol] | [g] | [mol] | [g] | [mol] | [g] | [mol] | [g] |
| 17 | 84 | 1 | 296 | 2 | 160 | 2 | 290 | 2 | 150 |
| 18 | 84 | 1 | 148 | 1 | 80 | 1 | 290 | 2 | 140 |
| 19 | 84 | 1 | 444 | 3 | 240 | 3 | 435 | 3 | 170 |
| 20 | 84 | 1 | 444 | 3 | 240 | 3 | 290 | 2 | 170 |
| 21 | 84 | 1 | 444 | 3 | 240 | 3 | 145 | 1 | 170 |
| 22 | 84 | 1 | 592 | 4 | 320 | 4 | 290 | 2 | 175 |
| 23 | 84 | 1 | 592 | 4 | 320 | 4 | 145 | 1 | 175 |
| 24 | 84 | 1 | 296 | 2 | 160 | 2 | 580 | 4 | 145 |
| 25 | 84 | 1 | 296 | 2 | 160 | 2 | 435 | 3 | 155 |
| 26 | 84 | 1 | 74 | 0,5 | 40 | 0,5 | 145 | 1 | 135 |
| 27 | 84 | 1 | 74 | 0,5 | 40 | 0,5 | 73 | 0,5 | 135 |

### Beispiele 28 bis 35

### Kondensationsprodukte aus Melamin, Dicyandiamid, Glyoxylsäure und Glyoxal

Mischungen aus Melamin, Dicyandiamid, 50 gew.-%iger wäßriger Glyoxylsäurelösung, 40 gew.-%iger wäßriger Glyoxallösung und Wasser wurden 1 Stunde auf 65°C erwärmt. Man erhielt klare, wasserverdünnbare Harzlösungen. Tabelle 6 zeigt die Mengen und die Molverhältnisse der eingesetzten Verbindungen bzw. Lösungen.

**Tabelle 6**

| Beispiel | Melamin | | Dicyandiamid | | Glyoxylsäure | | Glyoxal | | Wasser |
|---|---|---|---|---|---|---|---|---|---|
| | [g] | [mol] | [g] | [mol] | [g] | [mol] | [g] | [mol] | [g] |
| 28 | 115 | 0,91 | 7,6 | 0,09 | 444 | 3 | 435 | 3 | 295 |
| 29 | 103 | 0,82 | 15,1 | 0,18 | 444 | 3 | 435 | 3 | 290 |
| 30 | 92 | 0,73 | 22,7 | 0,27 | 444 | 3 | 435 | 3 | 295 |
| 31 | 81 | 0,64 | 30,3 | 0,36 | 444 | 3 | 435 | 3 | 275 |
| 32 | 63 | 0,5 | 42 | 0,5 | 444 | 3 | 435 | 3 | 270 |
| 33 | 63 | 0,5 | 42 | 0,5 | 888 | 6 | 870 | 6 | 395 |
| 34 | 63 | 0,5 | 42 | 0,5 | 370 | 2,5 | 363 | 2,5 | 250 |
| 35 | 95 | 0,75 | 21 | 0,25 | 407 | 2,75 | 399 | 2,75 | 190 |

### Beispiele 36

### Kondensationsprodukt aus Harnstoff und Glyoxal

Eine Mischung aus 60 g (1 mol) Harnstoff und 580 g einer 40 gew.-%igen Glyoxallösung (entsprechend 4 mol Glyoxal) wurde 2 Stunden auf 45°C erwärmt. Man erhielt eine klare Harzlösung.

### Beispiele 37 bis 42

### Kondensationsprodukte aus Melamin und Glutardialdehyd

Mischungen aus Melamin, 50 gew.-%iger Glutardialdehydlösung und Wasser wurden 1,5 Stunden auf 60°C erwärmt. Nach Abfiltrieren einer geringen Menge eines farblosen Niederschlags erhielt man klare Harzlösungen. Tabelle 7 zeigt die Mengen und die Molverhältnisse der eingesetzten Verbindungen bzw. Lösungen.

**Tabelle 7**

| Beispiel | Melamin | | Glutardialdehyd | | Wasser |
|---|---|---|---|---|---|
| | [g] | [mol] | [g] | [mol] | [g] |
| 37 | 126 | 1 | 1000 | 5 | 125 |
| 38 | 126 | 1 | 1200 | 6 | 125 |
| 39 | 126 | 1 | 800 | 4 | 125 |
| 40 | 126 | 1 | 600 | 3 | 125 |
| 41 | 126 | 1 | 700 | 3,5 | 125 |
| 42 | 126 | 1 | 400 | 2 | 65 |

### Beispiele 43

### Kondensationsprodukt aus Harnstoff und Glutardialdehyd

Eine Mischung aus 60 g (1 mol) Harnstoff, 200 g einer 50 gew.-%igen wäßrigen Glutardialdehydlösung (entsprechend 1 mol Glutardialdehyd) und 60 g Wasser wurde 1 Stunde auf 60°C erwärmt. Man erhielt eine wasserklare, gelbliche Lösung.

### Beispiele 44

### Kondensationsprodukt aus Dicyandiamid und Glutardialdehyd

Eine Mischung aus 84 g (1 mol) Dicyandiamid, 200 g einer 50 gew.-%igen wäßrigen Glutardialdehydlösung (entsprechend 1 mol Glutardialdehyd) und 84 g Wasser wurde 1 Stunde auf 60°C erwärmt. Man erhielt eine wasserklare, gelbliche Lösung.

### Anwendungsbeispiele

### Beispiel 45

### Nachgerbung von Chromleder

Ein in üblicher Weise hergestelltes Rindwetblue der Falzstärke 1,8 mm wurde gespült, gewaschen und anschließend mit Natriumhydrogencarbonat und Natriumformiat auf einen pH-Wert von 4,5 entsäuert. Danach wurde das Leder bei einer Flottenlänge von 100 % und einer Wassertemperatur von 40°C mit 8 Gew.-% des Kondensationsproduktes aus Beispiel 6, bezogen auf das Falzgewicht des Leders, 60 Minuten im Faß gewalkt. Anschließend wurde das Leder gespült, mit einem üblichen Lederfarbstoff gefärbt, mit einem üblichen Licker gefettet und mit Ameisensäure auf einem pH-Wert von 3,8 fixiert.

Nach üblicher Fertigstellung erhielt man ein gut gefülltes, weiches Leder mit enganliegenden, glatten Narben und wenig aufgehellter Färbung.

Das so hergestellte Leder eignet sich beispielsweise als Schuhoberleder.

### Beispiel 46

### Nachgerbung von mit Polymergerbstoffen behandeltem Chromleder

Ein in üblicher Weise hergestelltes Rindwetblue der Falzstärke 1,6 mm wurde gespült, gewaschen und anschließend auf einen pH-Wert von 4,5 entsäuert. Danach wurde das Leder bei einer Flottenlänge von 100 % und einer Wassertemperatur von 40°C mit 3 Gew.-% eines üblichen Polymergerbstoffes auf Acrylsäurebasis, bezogen auf das Falzgewicht des Leders, 40 Minuten im Faß gewalkt, anschließend in gleicher Flotte mit 6 Gew.-% des Kondensationsproduktes aus Beispiel 12 versetzt und weitere 60 Minuten bei der gleichen Temperatur gewalkt. Nach kurzem Spülen wurde das Leder mit 6 Gew.-% eines üblichen synthetischen Fettlickers, bezogen auf das Falzgewicht des Leders, gefettet und mit Ameisensäure bei einem PH-Wert von 3,8 fixiert.

Das nach üblicher Fertigstellung erhaltene Leder wies neben guter Fülle und Festnarbigkeit einen hohen Weißgrad auf. Es zeigte eine sehr gute Lichtechtheit und hervorragende Wärmeresistenz.

Das so hergestellte Leder eignet sich beispielsweise als Schuhoberleder.

### Beispiel 47

### Alleingerbung von Rindsblößen

Gut entkälkte und gepickelte Rindsblöße mit einer Spaltstärke von 3 mm wurde bei einer Flottenlänge von 50 % mit 25 Gew.-% des Kondensationsprodukte aus Beispiel 6, bezogen auf das Spaltgewicht der Blöße, in drei Portionen in jeweils zweistündigem Abstand versetzt und anschließend innerhalb von 16 Stunden bei Raumtemperatur und einem pH-Wert von 3,8 im Faß gewalkt. Danach wurde mit Natriumhydrogencarbonat ein pH-Wert von 7 eingestellt. Nach kurzem Spülen wurde das Leder wie üblich fertiggestellt.

Man erhielt ein weißes Leder mit einer Schrumpfungstemperatur von 82°C, das eine hohe Lichtechtheit und eine gute Wärmeresistenz aufwies.

## Patentansprüche (Patentansprüche für folgende(n) Vertragsstaat(en): AT, DE, FR, GB, IT, SE)

1. Verfahren zum Alleingerben von Blößen und zum Nachgerben von Chromleder, dadurch gekennzeichnet, daß man hierzu ein wasserlösliches Kondensationsprodukt aus
A) 1 mol Melamin, Dicyandiamid, Harnstoff oder Thioharnstoff oder eines Gemisches dieser Verbindungen,
B) 0,5 bis 12 mol Glyoxylsäure oder eines aliphatischen Dialdehyds mit bis zu 6 C-Atomen oder eines Gemisches dieser Verbindungen,
C) 0 bis 3 mol einer einkondensierbaren Verbindung mit mindestens einer phenolischen Hydroxylgruppe oder mindestens einer alkoholischen Hydroxylgruppe und
D) 0 bis 3 mol einer einkondensierbaren Verbindung mit einer Amid-oder Amin-Gruppierung
oder die Alkalimetall- oder Ammoniumsalze dieser Kondensationsprodukte verwendet.

2. Verfahren zum Alleingerben von Blößen und zum Nachgerben von Chromleder nach Anspruch 1, dadurch gekennzeichnet, daß man hierzu ein wasserlösliches Kondensationsprodukt verwendet, das aus Glyoxylsäure, Glyoxal oder Glutardialdehyd oder einer Mischung aus Glyoxylsäure und Glyoxal oder aus Glyoxylsäure und Glutardialdehyd als Komponente B aufgebaut ist.

3. Wasserlösliche Kondensationsprodukte gemäß Anspruch 1 aus
A') 1 mol Dicyandiamid, Harnstoff oder Thioharnstoff oder eines Gemisches dieser Verbindungen untereinander oder mit bis zu einem Anteil von 0,8 mol Melamin,
B) 0,5 bis 12 mol der Komponente B,
C) 0 bis 3 mol der Komponente C und
D) 0 bis 3 mol der Komponente D
mit Ausnahme von Kondensationsprodukten aus 0,25 bis 0,9 mol Harnstoff und 1 mol Glyoxal.

4. Verfahren zur Herstellung von wasserlöslichen Kondensationsprodukten mit Ausnahme von solchen aus 0,25 bis 0,9 mol Harnstoff und 1 mol Glyoxal gemäß Anspruch 3, dadurch gekennzeichnet, daß man
A') 1 mol Dicyandiamid, Harnstoff oder Thioharnstoff oder eines Gemisches dieser Verbindungen untereinander oder mit bis zu einem Anteil von 0,8 mol Melamin mit
B) 0,5 bis 12 mol der Komponente B,
C) 0 bis 3 mol der Komponente C und
D) 0 bis 3 mol der Komponente D
bei 20 bis 100°C in wäßriger Lösung kondensiert.

## Patentansprüche (Patentansprüche für folgende(n) Vertragsstaat(en): ES)

1. Verfahren zum Alleingerben von Blößen und zum Nachgerben von Chromleder, dadurch gekennzeichnet, daß man hierzu ein wasserlösliches Kondensationsprodukt aus
A) 1 mol Melamin, Dicyandiamid, Harnstoff oder Thioharnstoff oder eines Gemisches dieser Verbindungen,
B) 0,5 bis 12 mol Glyoxylsäure oder eines aliphatischen Dialdehyds mit bis zu 6 C-Atomen oder eines Gemisches dieser Verbindungen,
C) 0 bis 3 mol einer einkondensierbaren Verbindung mit mindestens einer phenolischen Hydroxylgruppe oder mindestens einer alkoholischen Hydroxylgruppe und
D) 0 bis 3 mol einer einkondensierbaren Verbindung mit einer Amid-oder Amin-Gruppierung
oder die Alkalimetall- oder Ammoniumsalze dieser Kondensationsprodukte verwendet.

2. Verfahren zum Alleingerben von Blößen und zum Nachgerben von Chromleder nach Anspruch 1, dadurch gekennzeichnet, daß man hierzu ein wasserlösliches Kondensationsprodukt verwendet, das aus Glyoxylsäure, Glyoxal oder Glutardialdehyd oder einer Mischung aus Glyoxylsäure und Glyoxal oder aus Glyoxylsäure und Glutardialdehyd als Komponente B aufgebaut ist.

3. Verfahren zur Herstellung von wasserlöslichen Kondensationsprodukten mit Ausnahme von solchen aus 0,25 bis 0,9 mol Harnstoff und 1 mol Glyoxal gemaß Anspruch 1 oder 2, dadurch gekennzeichnet, daß man
A') 1 mol Dicyandiamid, Harnstoff oder Thioharnstoff oder eines Gemisches dieser Verbindungen untereinander oder mit bis zu einem Anteil von 0,8 mol Melamin mit
B) 0,5 bis 12 mol der Komponente B,
C) 0 bis 3 mol der Komponente C und
D) 0 bis 3 mol der Komponente D
bei 20 bis 100°C in wäßriger Lösung kondensiert.

## Claims (Claims for the following Contracting State(s): AT, DE, FR, GB, IT, SE)

1. A process for self-tanning pelts and for retanning chrome leather, wherein a water-soluble condensate of
A) 1 mol of melamine, dicyandiamide, urea or thiourea or of a mixture of these compounds,
B) from 0.5 to 12 mol of glyoxylic acid or of an aliphatic dialdehyde of up to 6 carbon atoms or of a mixture of these compounds,
C) from 0 to 3 mol of a compound which can be subjected to a condensation reaction and has at least one phenolic hydroxyl group or at least one alcoholic hydroxyl group and
D) from 0 to 3 mol of a compound which can be subjected to a condensation reaction and has an amido or amino group,
or an alkali metal salt or ammonium salt of this condensate, is used for this purpose.

2. A process for self-tanning pelts and for retanning chrome leather as claimed in claim 1, wherein a water-soluble condensate which is composed of glyoxylic acid, glyoxal or glutardialdehyde or of a mixture of glyoxylic acid and glyoxal or of glyoxylic acid and glutardialdehyde as component B is used for this purpose.

3. A water-soluble condensate as claimed in claim 1, comprising
A') 1 mol of dicyandiamide, urea or thiourea or of a mixture of these compounds with one another or with up to 0.8 mol of melamine,
B) from 0.5 to 12 mol of component B,
C) from 0 to 3 mol of component C and
D) from 0 to 3 mol of component D,
with the exception of condensates of from 0.25 to 0.9 mol of urea and 1 mol of glyoxal.

4. A process for the preparation of a water-soluble condensate, with the exception of condensates of from 0.25 to 0.9 mol of urea and 1 mol of glyoxal, as claimed in claim 3, wherein
A') 1 mol of dicyandiamide, urea or thiourea or of a mixture of these compounds with one another or with up to 0.8 mol of melamine is condensed with
B) from 0.5 to 12 mol of component B,
C) from 0 to 3 mol of component C and
D) from 0 to 3 mol of component D
at from 20 to 100°C in aqueous solution.

## Claims (Claims for the following Contracting State(s): ES)

1. A process for self-tanning pelts and for retanning chrome leather, wherein a water-soluble condensate of
A) 1 mol of melamine, dicyandiamide, urea or thiourea or of a mixture of these compounds,
B) from 0.5 to 12 mol of glyoxylic acid or of an aliphatic dialdehyde of up to 6 carbon atoms or of a mixture of these compounds,
C) from 0 to 3 mol of a compound which can be subjected to a condensation reaction and has at least one phenolic hydroxyl group or at least one alcoholic hydroxyl group and
D) from 0 to 3 mol of a compound which can be subjected to a condensation reaction and has an amido or amino group,
or an alkali metal salt or ammonium salt of this condensate, is used for this purpose.

2. A process for self-tanning pelts and for retanning chrome leather as claimed in claim 1, wherein a water-soluble condensate which is composed of glyoxylic acid, glyoxal or glutardialdehyde or of a mixture of glyoxylic acid and glyoxal or of glyoxylic acid and glutardialdehyde as component B is used for this purpose.

3. A process for the preparation of a water-soluble condensate, with the exception of condensates of from 0.25 to 0.9 mol of urea and 1 mol of glyoxal, as claimed in claim 1 or 2, wherein
A') 1 mol of dicyandiamide, urea or thiourea or of a mixture of these compounds with one another or with up to 0.8 mol of melamine is condensed with
B) from 0.5 to 12 mol of component B,
C) from 0 to 3 mol of component C and
D) from 0 to 3 mol of component D
at from 20 to 100°C in aqueous solution.

## Revendications (Revendications pour l'(les) Etat(s) contractant(s) suivant(s): AT, DE, FR, GB, IT, SE)

1. Procédé de tannage isolé de peaux planées et de retannage de cuir chromé, caractérisé en ce qu'on utilise à cette fin un produit de condensation hydrosoluble de
A) 1 mole de melamine, de dicyanodiamide, d'urée, de thiourée ou d'un mélange de ces composés,
B) 0,5 à 12 moles d'acide glyoxylique d'un dialdéhyde aliphatique comportant jusqu'à 6 atomes de carbone ou d'un mélange de ces composés,
C) 0 à 3 moles d'un compose incorporable par condensation comportant au moins un groupement hydroxy phénolique ou au moins un groupement hydroxy alcoolique, et
D) 0 à 3 moles d'un compose incorporable par condensation comportant un groupement amide ou amine,
ou les sels de metaux alcalins ou d'ammonium de ces produits de condensation.

2. Procédé de tannage isolé de peaux planées et de retannage de cuir chrome selon la revendication 1, caractérisé en ce qu'on utilise a cette fin un produit de condensation hydrosoluble dont le composant B est constitué par de l'acide glyoxylique du glyoxal, du dialdéhyde glutarique ou par un mélange d'acide glyoxylique et de glyoxal ou d'acide glyoxylique et de dialdéhyde glutarique.

3. Produits de condensation hydrosolubles selon la revendication 1, composés de
A') 1 mole de dicyanodiamide, d'urée, de thiourée ou d'un mélange de ces composés entre eux ou avec une proportion de 0,8 mole au maximum de mélamine,
B) 0,5 à 12 moles du composant B,
C) 0 à 3 moles du composant C et
D) 0 à 3 moles du composant D,
à l'exclusion de produits de condensation de 0,25 à 0,9 mole d'urée et de 1 mole de glyoxal.

4. Procédé de préparation de produits de condensation hydrosolubles, à l'exclusion de ceux qui se composent de 0,25 à 0,9 mole d'urée et de 1 mole de glyoxal, selon la revendication 3, caractérisé en ce qu'on condense, à une température de 20 à 100°C en solution aqueuse.
A') 1 mole de dicyanodiamide, d'uree, de thiourée ou d'un mélange de ces composés entre eux ou avec une proportion de 0,8 mole au maximum de mélamine,
B) 0,5 à 12 moles du composant B,
C) 0 à 3 moles du composant C et
D) 0 a 3 moles du composant D.

## Revendications (Revendications pour l'(les) Etat(s) contractant(s) suivant(s): ES)

1. Procédé de tannage isolé de peaux planées et de retannage de cuir chromé, caractérisé en ce qu'on utilise à cette fin un produit de condensation hydrosoluble de
A) 1 mole de melamine, de dicyanodiamide, d'urée, de thiourée ou d'un mélange de ces composés,
B) 0,5 à 12 moles d'acide glyoxylique, d'un dialdéhyde aliphatique comportant jusqu'à 6 atomes de carbone ou d'un mélange de ces composés,
C) 0 à 3 moles d'un compose incorporable par condensation comportant au moins un groupement hydroxy phénolique ou au moins un groupement hydroxy alcoolique, et
D) 0 à 3 moles d'un composé incorporable par condensation comportant un groupement amide ou amine,
ou les sels de métaux alcalins ou d'ammonium de ces produits de condensation.

2. Procédé de tannage isolé de peaux planées et de retannage de cuir chrome selon la revendication 1, caractérisé en ce qu'on utilise à cette fin un produit de condensation hydrosoluble dont le composant B est constitué par de l'acide glyoxylique, du glyoxal, du dialdéhyde glutarique ou par un mélange d'acide glyoxylique et de glyoxal ou d'acide glyoxylique et de dialdéhyde glutarique.

3. Procédé de préparation de produits de condensation hydrosolubles, à l'exclusion de ceux qui se composent de 0,25 à 0,9 mole d'urée et de 1 mole de glyoxal, selon la revendication 1 ou 2, caractérisé en ce qu'on condense, à une température de 20 à 100°C en solution aqueuse,
A') 1 mole de dicyanodiamide d'urée, de thiourée ou d'un mélange de ces composés entre eux ou avec une proportion de 0,8 mole au maximum de mélamine,
B) 0,5 à 12 moles du composant B,
C) 0 à 3 moles du composant C et
D) 0 à 3 moles du composant D.
